(19) Europäisches Patentamt
European Patent Office
Office européen des brevets

(11) **EP 2 490 919 B1**

(12) **FASCICULE DE BREVET EUROPEEN**

(45) Date de publication et mention
de la délivrance du brevet:
**04.12.2013 Bulletin 2013/49**

(51) Int Cl.:
**B60N 2/02** *(2006.01)*  **B60N 2/04** *(2006.01)*
**B60N 2/12** *(2006.01)*  **B60N 2/20** *(2006.01)*

(21) Numéro de dépôt: **10785141.2**

(22) Date de dépôt: **19.10.2010**

(86) Numéro de dépôt international:
**PCT/FR2010/052225**

(87) Numéro de publication internationale:
**WO 2011/048324 (28.04.2011 Gazette 2011/17)**

(54) **SIEGE DE VEHICULE REGLABLE**

VERSTELLBARER FAHRZEUGSITZ

ADJUSTABLE VEHICLE SEAT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.10.2009 FR 0957425**

(43) Date de publication de la demande:
**29.08.2012 Bulletin 2012/35**

(73) Titulaire: **Peugeot Citroën Automobiles SA
78140 Vélizy Villacoublay (FR)**

(72) Inventeurs:
• **LEBRETON, Pierre
F-94300 Vincennes (FR)**
• **GUENET, Mathieu
F-95370 Montigny les Cormeilles (FR)**

(56) Documents cités:
**EP-A1- 0 697 305    DE-A1- 2 818 806
FR-A1- 2 470 022    FR-A1- 2 892 991
FR-A1- 2 917 020**

**Description**

L'invention concerne le domaine des sièges de véhicule réglables. Le siège réglable est motorisé pour faciliter ses déplacements. Il est alors utile soit de pouvoir mémoriser une position initiale afin de pouvoir y revenir soit de pouvoir mémoriser au moins un paramètre d'un déplacement aller du siège pour pouvoir en utilisant ce paramètre lors du déplacement retour du siège revenir à la position initiale du siège, ce qui revient à avoir indirectement mémorisé la position initiale du siège. Une application préférentielle de l'invention concerne le retour à la position initiale, correspondant au réglage d'un usager du véhicule, d'un siège déplacé vers l'avant du véhicule pour offrir un accès aux places arrière du véhicule encore appelé APA.

Selon un art antérieur, par exemple décrit dans la demande de brevet française FR 2470022 A1, il est connu un système détectant et mémorisant la quantité de tours effectués par la motorisation du siège lors du déplacement aller du siège afin d'appliquer la même quantité de tours lors du déplacement retour du siège de manière à ce que le siège retrouve la position initiale d'où il était parti pour commencer son déplacement aller. Il est également connu un système similaire dans la demande de brevet européenne EP 697305 A1, où le nombre de rotations du moteur est le paramètre mémorisé à l'aller et utilisé au retour du siège pour le ramener à sa position initiale.

Un avantage de cet art antérieur est sa précision qui peut être de l'ordre du millimètre pour retrouver la position initiale du siège. L'invention a mis en évidence plusieurs inconvénients à cet art antérieur, ce qui l'a incité à développer un système différent qui est certes un peu moins précis, avec une précision plutôt de l'ordre du demi centimètre pour retrouver la position initiale du siège. Cette perte de précision peut constituer un préjugé éloignant l'homme du métier d'une telle solution, mais pour l'invention, les avantages obtenus contrebalancent avantageusement cette perte de précision. En fait, la perte de précision qui pourrait être un préjugé insurmontable pour l'homme du métier, se révèle cependant raisonnable à l'expérience, à savoir un demi centimètre de précision au lieu d'un millimètre. Cette imprécision relative, essentiellement due à des problèmes de frottements et de dimensionnement peut par ailleurs être réduite en diminuant les frottements du système mécanique de déplacement du siège et en serrant les tolérances du dimensionnement, ce qui peut être fait pour d'autres raisons que la problématique de l'invention, l'invention pouvant alors en bénéficier. Cette perte de précision est particulièrement acceptable pour le siège passager.

Un premier inconvénient de cet art antérieur est sa complexité et son coût. En effet, le système tout électronique de comptage de tour de moteur implique l'utilisation d'un moteur évolué associé à un capteur et à une électronique de gestion relativement complexe. L'invention permet un gain en coût car la motorisation utilisable est plus simple et plus basique tout comme l'électronique de gestion associée. Le gain en coût peut aller jusqu'à diviser le prix de l'ensemble motorisation et électronique associée par un facteur représentant plusieurs fois le prix de la motorisation simple, et de son électronique associée, utilisable avec l'invention.

Un deuxième inconvénient de cet art antérieur concerne le cas malheureusement relativement fréquent où un colis ou une valise est placée derrière le siège empêchant celui-ci de retrouver sa position initiale à l'issue du déplacement retour. L'invention offre alors un déplacement sécurisé en cas de bagage disposé de manière à empêcher le siège de revenir jusqu'à sa position initiale. En effet, dans ce cas et contrairement au dispositif de l'art antérieur à défaut d'un système de sécurité supplémentaire type temporisation, on ne risque pas de vider la source d'énergie car l'alimentation de la motorisation s'arrête au bout d'un temps de l'ordre de la durée du déplacement aller du siège, à savoir généralement une durée de quelques secondes. La position à l'issue du déplacement retour du siège est alors celle imposée par la disposition du bagage gênant, qui est différente de la position initiale du siège. Dans le cas d'une motorisation électrique, la fonction accès place arrière étant alimentée par le pôle plus permanent de la batterie car devant rester accessible même si le moteur thermique du véhicule ne tourne pas, pour pouvoir par exemple permettre à un passager arrière de s'extraire plus facilement du véhicule en cas de choc, la réserve d'énergie électrique disponible sans perturber le fonctionnement de la batterie est faible. Il est donc intéressant de ne pas la gaspiller en essayant à toute force de rejoindre une position initiale qui n'est plus accessible au siège à l'issue de son déplacement retour.

On connaît également du document FR2892991A1, un siège conforme au préambule de la revendication 1.

Pour résoudre ces deux inconvénients, l'invention propose de compter non pas le nombre de tours du moteur, mais tout simplement le temps mis par le siège pour son déplacement aller pour lui permettre, lors de son déplacement retour en lui autorisant un temps similaire pour l'effectuer, de revenir à sa position initiale ou à son voisinage immédiat sans difficulté. La simple temporisation proposée est nettement plus simple que le comptage de tour de motorisation de l'art antérieur et présente une sécurité accrue en cas de blocage intempestif du déplacement du siège, par exemple par un bagage mal placé. En se basant lors du déplacement retour du siège sur la durée du déplacement aller depuis la position initiale jusqu'à une position extrême, par exemple tout avant dans le cas de l'accès place arrière, pour effectuer le chemin inverse de la position extrême vers la position initiale, on a de bonnes chances de ramener le siège à sa position initiale ou à tout le moins dans son voisinage immédiat.

Selon l'invention, il est prévu un siège de véhicule conforme à la revendication 1.

Selon l'invention, dans le cas d'un déplacement de siège sur une ou plusieurs glissières associées, il est aussi prévu un ensemble comprenant : au moins une glissière de siège de véhicule ; un siège de véhicule ; une motorisation apte à entraîner le déplacement du siège sur la glissière dans un sens donné, puis dans le sens inverse ; un système de mémorisation d'un paramètre de déplacement du siège dans le sens donné, apte à communiquer ledit paramètre à ladite motorisation qui l'utilise pour essayer de ramener le siège à sa position initiale lors du déplacement du siège dans le sens inverse ; caractérisé en ce que ledit paramètre est le temps de déplacement du siège dans le sens donné.

Le temps déplacement aller du siège est évalué par une temporisation, c'est-à-dire par un chronométrage.

De préférence, le siège est destiné à coulisser dans le véhicule d'avant en arrière et d'arrière en avant. Dans le cas d'un réglage de coulissement horizontal sur glissières portant le poids du siège, là où les systèmes électroniques classiques sont complexes et là où des systèmes purement mécaniques du type trois jeux de glissières de manière à conserver le réglage siège après le retour à la position initiale, à savoir un mouvement entre la première et la deuxième glissière pour le réglage classique, et un autre mouvement entre la deuxième et la troisième glissière pour le mouvement rapide suite à déverrouillage, seraient complexes, l'invention offre une solution simple et bon marché. Par contre, dans le domaine du pivotement, l'articulation mécanique classique à trois flasques, relativement simple et bon marché, peut être conservée, même au sein d'un système selon l'invention.

Une autre application envisageable de l'invention concerne la conservation de la rehausse d'un siège après la réalisation de la fonction mise en tablette, par pivotement du dossier sur le coussin d'assise pour assurer le chargement d'un objet long. Dans ce dernier cas, le déplacement du siège n'est pas un coulissement horizontal, mais la composée d'un déplacement vertical et d'un déplacement horizontal.

De préférence, la motorisation comprend un moteur électrique et ledit paramètre évalué est le temps d'alimentation électrique du moteur électrique nécessaire au déplacement aller du siège. L'alimentation électrique est avantageusement une alimentation en tension, pour moteur électrique par exemple à courant continu. Le temps est un paramètre facilement accessible et aisément mesurable par le système et ce, avec d'autant plus de précision que l'alimentation électrique est simple, ici un échelon de tension constante, par exemple à 12 volts, ce qui correspond à la tension nominale de la batterie du véhicule.

De préférence, le début de l'évaluation du temps de déplacement aller correspond à l'indication par un contacteur du siège du basculement du dossier du siège vers l'assise du siège. Ainsi, on obtient un début de chronométrage net et précis qui améliore la précision de l'évaluation du temps de déplacement. Ce contacteur se déclenche lorsque le dossier s'incline vers l'avant en atteignant un certain angle, correspondant par exemple à 10 degrés vers l'avant pour le revêtement avant du dossier de siège ou à la verticale pour l'armature du dossier de siège, le dossier de siège en position d'utilisation étant ainsi garanti d'être plus incliné vers l'arrière que la position déclenchant le contacteur. Sinon on courrait le risque que le contacteur ne se déclenche pas du tout.

De préférence, la fin de l'évaluation du temps de déplacement aller correspond à l'indication par un contacteur du siège de l'arrivée du siège au niveau d'une butée limitant le mouvement du siège vers l'avant lors de son déplacement aller. Cette butée est une butée mécanique. Ainsi, on obtient une fin de chronométrage nette et précise qui améliore la précision de l'évaluation du temps de déplacement.

De préférence, l'évaluation du temps de déplacement aller du siège est réalisée par la mesure d'une durée. Cette mesure est une opération qui est plus simple à effectuer qu'une mesure de position ou de nombre de tours de rotations. Elle devient particulièrement simple à réaliser à l'aide d'un relais temporisé.

De préférence, le siège ne comporte ni capteur de tour de la motorisation ni capteur de position du siège. On obtient ainsi un gain supplémentaire en réduction de coût grâce à l'absence de capteur.

L'invention concerne également un véhicule caractérisé en ce qu'il comprend un siège selon l'invention ou un ensemble selon l'invention.

De préférence, le siège est un siège passager. Ainsi, la précision du réglage, par exemple longitudinal, est moins critique que pour un siège conducteur comportant un réglage de distance entre le siège d'une part et la ou les pédales de conduite d'autre part. Le défaut de précision de l'invention par rapport à l'art antérieur n'est dans ce cas même plus un handicap.

De préférence, le siège effectuant le déplacement aller puis le déplacement retour à sa position initiale appartient à une rangée de sièges avant située juste devant une rangée de sièges arrière à laquelle la rangée de sièges avant permet un accès. La fonction accès place arrière est une application particulièrement intéressante pour l'invention, car elle comporte la nécessité à la fois d'un réglage fin classique de la position du siège et d'un mouvement rapide d'un coup après déverrouillage rapide justement pour obtenir l'accès aux places arrière. La méthode de mémorisation de la position initiale de siège avant déplacement du siège réalisant l'accès aux places arrière du véhicule selon l'invention entraîne alors un surcoût faible par rapport au réglage classique, ce qui ne serait le cas ni d'un système de comptage de tour de moteur comme dans l'art antérieur ni d'un système purement mécanique à trois niveaux de glissière déjà présenté précédemment.

Avantageusement, le véhicule est un véhicule trois portes, où il est particulièrement intéressant d'offrir une fonction accès place arrière. En effet, l'accès place arrière ne peut alors se faire que par la rangée avant. Une autre application peut concerner aussi un véhicule ayant cinq portes ou plus, de type minibus ou minivan, le déclenchement du déplacement aller du siège n'étant alors plus forcément précédé par le basculement du dossier sur l'assise, puisque l'amplitude du coulissement horizontal du siège pouvant être plus importante, il est moins utile de la faire précéder par le basculement du dossier sur l'assise.

Dans un premier mode de réalisation, ledit siège est disposé parallèlement par rapport au plan horizontal du véhicule, et le temps de déplacement retour du siège est choisi égal au temps évalué de déplacement aller du siège. Cela concerne le cas simple du plancher plat de véhicule horizontal.

Dans un deuxième mode de réalisation, ledit siège est disposé de manière inclinée par rapport au plan horizontal du véhicule, et le temps de déplacement retour du siège est choisi différent du temps évalué de déplacement aller du siège de manière à correspondre au temps évalué de déplacement aller du siège modulé par une correction représentative du sens et de la valeur de l'inclinaison dudit siège. Cela concerne le cas un peu plus complexe du plancher incliné de véhicule ; cas d'un véhicule coupé ou d'un véhicule cabriolet. Le plancher est incliné vers le haut vers l'avant du véhicule, avantageusement d'une valeur d'inclinaison comprise entre 1% et 10%.

A titre d'exemple avantageux, la relation entre temps de déplacement retour tr du siège et temps de déplacement aller ta du siège peut être linéaire, c'est-à-dire de la forme :

$$tr = a \; ta + b$$

avec a et b deux constantes obtenues par exemple par un plan d'expériences de type série de mesures réalisées pour des accès place arrière effectués depuis différentes positions initiales de siège correspondant à différents réglages longitudinaux de siège. Ces constantes a et b dépendent avantageusement de la pente de plancher et de la masse du siège, ainsi que préférentiellement aussi de la puissance de la motorisation utilisée ainsi que des résistances électriques de ligne constatées.

Par souci de simplicité, mais au détriment d'un peu de précision, le temps de déplacement retour du siège peut être aussi, dans ce deuxième mode de réalisation, choisi égal au temps de déplacement aller du siège, comme dans le cas d'un plancher plat. Dans ce cas, on a : tr = ta. L'imprécision ajoutée reste du second ordre par rapport à un facteur de premier ordre, ici absent car lors de la fonction accès place arrière, le siège basculé est vide, qui concerne la masse posée, bagage ou individu, sur l'assise du siège qui se déplace.

Un véhicule inclut notamment un camion, une voiture, un bus, un avion, un bateau, un train. Un véhicule est de préférence un véhicule à moteur, avantageusement terrestre. Un véhicule est préférentiellement une voiture.

L'invention va maintenant être décrite plus en détail à l'aide des figures ci-après, données à titre d'exemples illustratifs et non limitatifs, où :

- les figures 1 à 3 représentent schématiquement trois positions successives d'un exemple de siège selon l'invention pendant son déplacement aller, d'une position initiale de réglage personnalisé jusqu'à une position en butée vers l'avant ;
- les figures 4 à 6 représentent schématiquement trois positions successives d'un exemple de siège selon l'invention pendant son déplacement retour, de ladite position en butée vers l'avant jusqu'à ladite position initiale de réglage personnalisé.

Dans tout le texte, sauf mention contraire, les orientations avant et arrière correspondent aussi bien aux orientations du siège qu'à celles du véhicule dans lequel le siège sera installé, car ce sont les mêmes.

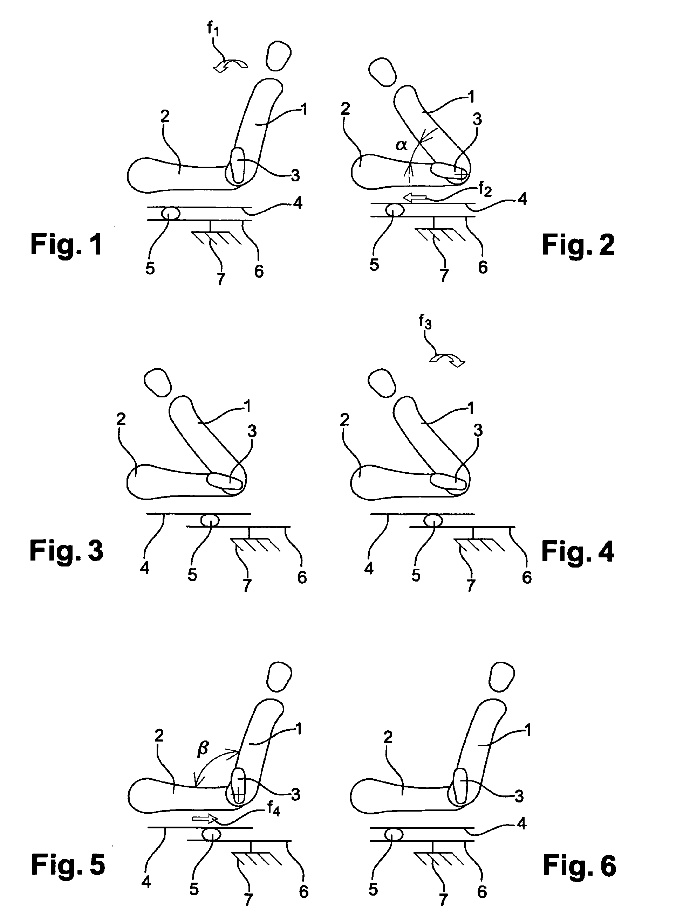

Le siège représenté sur l'ensemble des figures 1 à 6 comprend un dossier 1 articulé sur une assise 2 de manière à pouvoir basculer vers l'assise 2 par pivotement dans le sens inverse des aiguilles d'une montre. La position relative d'inclinaison entre d'une part le dossier 1 et d'autre part l'assise 2 est verrouillable et déverrouillable par l'intermédiaire d'une poignée 3 qui comprend le contacteur déterminant le début du chronométrage du temps de déplacement aller du siège. La butée avant et le contacteur de l'assise 2 correspondant coopérant avec cette butée mécanique avant et déterminant la fin du chronométrage du temps de déplacement aller du siège ne sont pas représentées sur les figures pour des raisons de simplicité. Ce contacteur d'assise 2 est situé en partie avant d'assise 2. Une glissière mobile 4 située de chaque côté de l'assise 2 et solidarisée à l'assise 2 coulisse sur une glissière fixe 6 par rapport au plancher 7 de véhicule correspondante. Le coulissement de la glissière mobile 4 sur la glissière fixe 6 est entraîné par un moteur électrique 5 dont une partie est située entre d'une part la glissière mobile 4 et d'autre part la glissière fixe 6. Les glissières 4 et 6 sont orientées dans le sens longitudinal. Le véhicule considéré comprend un plancher 7 qui est plat et horizontal. Le verrouillage du dossier 1 par rapport à l'assise 2 est réalisé par crantage mécanique. La glissière mobile 4 se déplaçant par rapport à la glissière fixe 6 par l'intermédiaire du moteur électrique 5 et d'un dispositif de vis sans fin, l'arrêt d'alimentation du moteur électrique 5 entraîne automatiquement un verrouillage électrique de la glissière mobile 4 par rapport à la glissière fixe 6.

Sur la figure 1 , le siège est en position initiale. Le dossier 1 est relevé comme la poignée 3 est en position verrouillée. L'assise 2 et la glissière mobile 4 sont vers l'arrière du véhicule. La flèche f1 montre le basculement du dossier 1 vers l'avant qui va être réalisé pour aboutir à la position intermédiaire de la figure 2.

Sur la figure 2, un utilisateur a basculé le dossier 1 vers l'avant du véhicule en direction de l'assise 2 en inclinant la poignée 3 qui est maintenant en position déverrouillée. L'angle α que font entre eux le dossier 1 et l'assise 2 est suffisamment aigu pour que le contacteur de début de chronométrage ait démarré et que le moteur électrique 5 ait commencé à être alimenté en tension par la batterie du véhicule. La flèche f2 montre le coulissement vers l'avant de l'assise 2 et de la glissière mobile 4 qui va être réalisé pour aboutir à la position extrême en butée vers l'avant représentée à la figure 3.

Sur la figure 3, l'ensemble constitué par la glissière mobile 4, l'assise 2 et le dossier 1 en position incliné, a coulissé vers l'avant jusqu'à la butée avant. Les occupants des sièges arrière peuvent monter ou descendre de véhicule aisément. Le temps du déplacement aller entre la position initiale et la position extrême en butée vers l'avant vaut ta et a été mesuré et mémorisé par l'électronique de gestion simple du moteur électrique 5 simple également, par exemple moteur à courant continu. Ce temps de déplacement aller ta du siège correspond à la durée d'alimentation en tension du moteur électrique 5 qui a été nécessaire pour que le siège se déplace de sa position initiale à sa position extrême en butée avant.

Sur la figure 4, le siège est en position extrême en butée vers l'avant. Le dossier 1 est incliné vers l'avant en direction de l'assise 2 comme la poignée 3 est en position déverrouillée. L'assise 2 et la glissière mobile 4 sont vers l'avant du véhicule. La flèche f3 montre le basculement du dossier 1 vers l'arrière qui va être réalisé pour aboutir à la position intermédiaire de la figure 5.

Sur la figure 5, un utilisateur a basculé le dossier 1 vers l'arrière du véhicule en relevant la poignée 3 qui est en position maintenant verrouillée. L'angle β que font entre le dossier 1 et l'assise 2 est suffisamment obtus pour que le contacteur de début de chronométrage ait démarré et que le moteur électrique 5 ait commencé à être alimenté en tension par la batterie du véhicule. La flèche f4 montre le coulissement vers l'arrière de l'assise 2 et de la glissière mobile 4 qui va être réalisé pour revenir à la position initiale de réglage personnalisé représentée à la figure 6.

Sur la figure 6, l'ensemble constitué par la glissière mobile 4, l'assise 2 et le dossier 1 en position relevée, a coulissé vers l'arrière jusqu'à sa position initiale que le siège occupait avant le début du déplacement aller. L'occupant du siège avant représenté sur la figure 6 peut maintenant s'installer dans son siège.

Le temps du déplacement retour entre la position extrême en butée vers l'avant et la position initiale vaut tr et doit être égal au temps de déplacement aller ta précédemment mesuré et mémorisé. Pour cela, la durée d'alimentation en tension du moteur électrique 5 est ensuite choisie, par l'électronique de gestion du moteur électrique 5, identique à celle qui avait été nécessaire pour que le siège se déplace de sa position initiale à sa position extrême en butée avant. Ainsi, le siège pourra retourner sans difficulté à sa position initiale, sauf problème de type bagage coincé derrière le siège déjà analysé précédemment, ou à son voisinage immédiat à la précision près du système selon l'invention.

**Revendications**

1. Siège de véhicule muni d'une motorisation (5) pouvant lui faire effectuer un déplacement aller puis un déplacement retour à sa position initiale en évaluant un paramètre lors du déplacement aller et en utilisant ce paramètre évalué lors du déplacement retour, **caractérisé en ce que** ledit paramètre évalué est le temps de déplacement aller (ta) du siège.

2. Siège de véhicule selon la revendication 1, **caractérisé en ce que** le siège est destiné à coulisser dans le véhicule d'avant en arrière et d'arrière en avant.

3. Siège de véhicule selon l'une quelconque des revendications précédentes, **caractérisé en ce que** la motorisation comprend un moteur électrique (5) et **en ce que** ledit paramètre évalué est le temps d'alimentation électrique du moteur électrique (5) nécessaire au déplacement aller du siège.

4. Siège de véhicule selon l'une quelconque des revendications précédentes, **caractérisé en ce que** le début de l'évaluation du temps de déplacement aller (ta) correspond à l'indication par un contacteur du siège du basculement du dossier (1) du siège vers l'assise (2) du siège.

5. Siège de véhicule selon l'une quelconque des revendications précédentes, **caractérisé en ce que** la fin de l'évaluation du temps de déplacement aller (ta) correspond à l'indication par un contacteur du siège de l'arrivée du siège au niveau d'une butée limitant le mouvement du siège vers l'avant lors de son déplacement aller.

6. Siège de véhicule selon l'une quelconque des revendications précédentes, **caractérisé en ce que** l'évaluation du temps de déplacement aller (ta) du siège est réalisée par la mesure d'une durée.

7. Siège de véhicule selon l'une quelconque des revendications précédentes, **caractérisé en ce qu'**il ne comporte ni capteur de tour de la motorisation ni capteur de position du siège.

8. Ensemble comprenant :

   - au moins une glissière (6) de siège de véhicule ;
   - un siège (1 , 2, 4) de véhicule ;

- une motorisation (5) apte à entraîner le déplacement du siège sur la glissière (6) dans un sens donné, puis dans le sens inverse ;
- un système de mémorisation d'un paramètre de déplacement du siège dans le sens donné, apte à communiquer ledit paramètre à ladite motorisation (5) qui l'utilise pour essayer de ramener le siège à sa position initiale lors du déplacement du siège dans le sens inverse ;

**caractérisé en ce que** ledit paramètre est le temps de déplacement (ta) du siège dans le sens donné.

9. Véhicule **caractérisé en ce qu'**il comprend un siège selon l'une quelconque des revendications 1 à 7 ou un ensemble selon la revendication 8.

10. Véhicule selon la revendication 9, **caractérisé en ce que** le siège est un siège passager.

11. Véhicule selon l'une des revendications 9 à 10, **caractérisé en ce que** le siège effectuant le déplacement aller puis le déplacement retour à sa position initiale appartient à une rangée de sièges avant située juste devant une rangée de sièges arrière à laquelle la rangée de sièges avant permet un accès.

12. Véhicule selon la revendication 11, **caractérisé en ce que** le véhicule est un véhicule trois portes.

13. Véhicule selon l'une des revendications 9 à 12, **caractérisé en ce que** ledit siège est disposé parallèlement par rapport au plan horizontal du véhicule, et **en ce que** le temps de déplacement retour du siège est choisi égal au temps évalué de déplacement aller (ta) du siège.

14. Véhicule selon l'une des revendications 9 à 12, **caractérisé en ce que** ledit siège est disposé de manière inclinée par rapport au plan horizontal du véhicule, et **en ce que** le temps de déplacement retour du siège est choisi différent du temps évalué de déplacement aller (ta) du siège de manière à correspondre au temps évalué de déplacement aller (ta) du siège modulé par une correction représentative du sens et de la valeur de l'inclinaison dudit siège.

**Patentansprüche**

1. Fahrzeugsitz, der mit einem Antrieb (5) versehen ist, der ihn eine Hinbewegung und dann eine Zurückbewegung zu seiner Ausgangsposition unter Bewertung eines Parameters bei der Hinbewegung und unter Einsatz dieses bewerteten Parameters bei der Zurückbewegung ausführen lassen kann, **dadurch gekennzeichnet, dass** der bewertete Parameter die Hinbewegungszeit (ta) des Sitzes ist.

2. Fahrzeugsitz nach Anspruch 1, **dadurch gekennzeichnet, dass** der Sitz dazu bestimmt ist, in dem Fahrzeug von vorn nach hinten und von hinten nach vorn zu gleiten.

3. Fahrzeugsitz nach einem der vorhergehenden Ansprüche, **dadurch gekennzeichnet, dass** der Antrieb einen Elektromotor (5) aufweist, und dass der bewertete Parameter die Stromversorgungszeit des Elektromotors (5) ist, die für die Bewegung des Sitzes erforderlich ist.

4. Fahrzeugsitz nach einem der vorhergehenden Ansprüche, **dadurch gekennzeichnet, dass** der Bewertungsbeginn der Hinbewegungszeit (ta) einem Hinweis durch einen Schalter des Sitzes auf das Kippen der Rükkenlehne (1) des Sitzes zu der Sitzfläche (2) des Sitzes entspricht.

5. Fahrzeugsitz nach einem der vorhergehenden Ansprüche, **dadurch gekennzeichnet, dass** das Ende der Bewertung der Hinbewegungszeit (ta) einem Hinweis durch einen Schalter des Sitzes auf die Ankunft des Sitzes auf dem Niveau eines Anschlags, der die Bewegung des Sitzes nach vorn bei seiner Hinbewegung beschränkt, entspricht.

6. Fahrzeugsitz nach einem der vorhergehenden Ansprüche, **dadurch gekennzeichnet, dass** die Bewertung der Hinbewegungszeit (ta) des Besitzes durch die Messung einer Dauer ausgeführt wird.

7. Fahrzeugsitz nach einem der vorhergehenden Ansprüche, **dadurch gekennzeichnet, dass** er weder einen Drehzahlsensor des Antriebs noch einen Positionssensor des Sitzes aufweist.

8. Einheit, die Folgendes aufweist:

- mindestens eine Fahrzeugsitz-Gleitführung (6),
- einen Fahrzeugsitz (1, 2, 4),
- einen Antrieb (5), der fähig ist, die Bewegung des Sitzes auf der Gleitführung (6) in eine gegebene Richtung und dann in die umgekehrte Richtung anzutreiben,
- ein Speichersystem eines Bewegungsparameters des Sitzes in die gegebene Richtung, das fähig ist, dem Antrieb (5) den Parameter mitzuteilen, der ihn verwendet, um zu versuchen, den Sitz zu seiner Ausgangsposition bei der Bewegung des Sitzes in die umgekehrte Richtung zurückzuführen,

**dadurch gekennzeichnet, dass** der Parameter die Bewegungszeit (ta) des Sitzes in die gegebene Richtung ist.

**9.** Fahrzeug, **dadurch gekennzeichnet, dass** es einen Sitz nach einem der Ansprüche 1 bis 7 oder eine Einheit nach Anspruch 8 aufweist.

**10.** Fahrzeug nach Anspruch 9, **dadurch gekennzeichnet, dass** der Sitz ein Beifahrersitz ist.

**11.** Fahrzeug nach einem der Ansprüche 9 bis 10, **dadurch gekennzeichnet, dass** der Sitz, der die Hinbewegung und dann die Zurückbewegung zu seiner Ausgangsposition ausführt, zu einer vorderen Sitzreihe gehört, die gleich vor einer hinteren Sitzreihe, zu der die vordere Sitzreihe einen Zugang erlaubt, liegt.

**12.** Fahrzeug nach Anspruch 11, **dadurch gekennzeichnet, dass** das Fahrzeug ein dreitüriges Fahrzeug ist.

**13.** Fahrzeug nach einem der Ansprüche 9 bis 12, **dadurch gekennzeichnet, dass** der Sitz parallel in Bezug zu der horizontalen Ebene des Fahrzeugs angeordnet ist, und dass die Zurückbewegungszeit des Sitzes gleich der bewerteten Zeit der Hinbewegung (ta) des Sitzes ausgewählt ist.

**14.** Fahrzeug nach einem der Ansprüche 9 bis 12, **dadurch gekennzeichnet, dass** der Sitz in Bezug zu der horizontalen Ebene des Fahrzeugs geneigt angeordnet ist und dass die Zurückbewegungszeit des Sitzes von der bewerteten Hinbewegungszeit (ta) des Sitzes derart unterschiedlich ausgewählt ist, dass sie der bewerteten Hinbewegungszeit (ta) des Sitzes moduliert mit einer Korrektur entspricht, die für die Richtung und den Neigungswert des Sitzes repräsentativ ist.

**Claims**

**1.** A vehicle seat provided with a motorisation (5) able to cause it to carry out a movement from then a movement back to its initial position by evaluating a parameter during the outgoing movement and by using this evaluated parameter during the return movement, **characterized in that** the said evaluated parameter is the time of the outgoing movement (ta) of the seat.

**2.** The vehicle seat according to Claim 1, **characterized in that** the seat is intended to slide in the vehicle backwards and forwards.

**3.** The vehicle seat according to any one of the preceding claims, **characterized in that** the motorisation includes an electric motor (5) and **in that** said evaluated parameter is the time of electrical supplying of the electric motor (5) necessary for the outgoing movement of the seat.

**4.** The vehicle seat according to any one of the preceding claims, **characterized in that** the start of the evaluation of the time of the outgoing movement (ta) corresponds to the indication by a contactor of the seat of the tilting of the backrest (1) of the seat towards the seat pan (2) of the seat.

**5.** The vehicle seat according to any one of the preceding claims, **characterized in that** the end of the evaluation of the time of the outgoing movement (ta) corresponds to the indication by a contactor of the seat of the arrival of the seat at the level of a stop limiting the movement of the seat towards the front during its outgoing movement.

**6.** The vehicle seat according to any one of the preceding claims, **characterized in that** the evaluation of the time of outgoing movement (ta) of the seat is realized by the measurement of a duration.

**7.** The vehicle seat according to any one of the preceding claims, **characterized in that** it does not comprise either a revolution sensor of the motorisation or a position sensor of the seat.

**8.** An assembly including:

- at least one vehicle seat slide (6);
- a vehicle seat (1, 2, 4);
- a motorisation (5) able to drive the movement of the seat on the slide (6) in a given direction, then in the opposite direction;
- a storage system of a movement parameter of the seat in the given direction, able to communicate said parameter to said motorisation (5) which uses it to attempt to bring the seat back to its initial position during the movement of the seat in the opposite direction;

**characterized in that** said parameter is the time of movement (ta) of the seat in the given direction.

**9.** A vehicle **characterized in that** it includes a seat according to any one of Claims 1 to 7 or an assembly according to Claim 8.

**10.** The vehicle according to Claim 9, **characterized in that** seat is a passenger seat.

**11.** The vehicle according to one of Claims 9 to 10, **characterized in that** the seat carrying out the outgoing movement then the return movement to its initial position belongs to a row of front seats situated just in front of a row of rear seats to which the row of front seats permits access.

12. The vehicle according to Claim 11, **characterized in that** the vehicle is a three-door vehicle.

13. The vehicle according to one of Claims 9 to 12, **characterized in that** said seat is disposed parallel with respect to the horizontal plane of the vehicle, and **in that** the time of return movement of the seat is selected to be equal to the evaluated time of outgoing movement (ta) of the seat.

14. The vehicle according to one of Claims 9 to 12, **characterized in that** said seat is disposed in an inclined manner with respect to the horizontal plane of the vehicle, and **in that** the time of return movement of the seat is selected to be different from the evaluated time of outgoing movement (ta) of the seat so as to correspond to the evaluated time of outgoing movement (ta) of the seat modulated by a representative correction of the direction and of the value of the inclination of said seat.

**Fig. 1**

**Fig. 2**

**Fig. 3**

**Fig. 4**

**Fig. 5**

**Fig. 6**

9

## RÉFÉRENCES CITÉES DANS LA DESCRIPTION

**Documents brevets cités dans la description**

- FR 2470022 A1
- EP 697305 A1
- FR 2892991 A1